# EUROPEAN PATENT SPECIFICATION

(11) **EP 1 167 469 B1**
(45) Date of publication and mention of the grant of the patent: **22.08.2007**
(21) Application number: 01114763.4
(22) Date of filing: 25.06.2001
(51) Int. Cl.: C09D 11/00

(54) **An ink for inkjet printing that produces a durable image**
Tintenstrahltinte erzeugend ein beständiges Bild
Encre pour l'impression par jet d'encre produisant une image durable

(30) Priority: 26.06.2000 US 213918 P
(43) Date of publication of application: 02.01.2002
(73) Proprietor: Xennia Technology Limited, Letchworth Hertfordshire SG6 1LN (GB)
(72) Inventor: Fox, James E., Welford Boat Station, Stratford-upon-Avon, Warks. CV37 8PP (GB); Hudd, Alan L., Herts. SG8 8NQ (GB)
(74) Representative: Matthews, Heather Clare

(56) References cited:
- EP-A- 1 114 850
- US-A- 4 395 287
- US-A- 5 512 089
- US-A- 5 985 014
- US-A- 6 004 389

## Description

### FIELD OF THE INVENTION

The present invention relates to a process of drop-on-demand inkjet printing employing an ink formulation particularly suitable for use in drop-on-demand inkjet printing to produce a durable image on a substrate.

### BACKGROUND OF THE INVENTION

Inkjet printing has gained wide acceptance in the printing industry because it is a relatively inexpensive form of printing. Inkjet printing involves forming characters on a substrate by ejecting ink droplets from a printhead having one or more nozzles and onto the surface of the substrate. The substrate may, for example, be a paper, a film, or a fabric. There are basically two types of inkjet printing technology: continuous inkjet printing (CIJ) and drop on demand printing (DOD). In drop on demand printing, ink droplets are produced only when needed. The ink is drawn from an ink reservoir into a capillary channel in a printhead. Within the channel, an energy pulse disrupts a portion of the ink into a droplet that is expelled from the nozzle of the printhead and onto a substrate. The energy pulse may be provided by a piezo-electric element, which vibrates to produce the pulse. Alternatively, the external stimulus may be provided by a thermal element, which heats up the ink and forms a bubble that creates a pressure wave, forcing an ink droplet out of the channel and, hence out of the nozzle of the printhead. In continuous inkjet printing (CIJ), there is continuous, very high-speed drop generation. However, regardless of the type of inkjet printing employed, the inkjet ink must have a good drying property, be free from bleeding and feathering, and have a reduced tendency to fade. There is often a problem with the ink drying in the nozzles of the printhead. There have been a number of inkjet ink formulations that have attempted to overcome these problems.

U.S. Patent No. 5,344,483 relates to an ink composition suitable for inkjet printing made from a fatty acid ester base and a diluent, wherein the base consists essentially of a fatty acid which is a liquid at room temperature, a polyalkylene glycol, and a dye which has been reacted with the fatty acid to form an ester. The ink composition is essentially free of water; the water resulting from the esterification having been eliminated in order to drive the esterification reaction substantially to completion.

U.S. Patent No. 5,514,207 relates to an aqueous inkjet composition which includes a pigment and an aqueous carrier medium containing sulfolane and a low molecular weight polyethylene glycol.

U.S. Patent No. 5,888,287 relates to an inkjet composition which exhibits a reduced tendency to smear upon application to a substrate and which includes a propylene glycol ether and/or a propylene glycol ether acetate, a surfactant and a colorant. The surfactant is a silicone, a fluorosurfactant or a combination thereof.

U.S. Patent No. 5,746,818 relates to an ink composition comprising a pigment dispersible and/or soluble in water without the aid of any dispersant and a glycol ether selected from the group consisting of diethylene glycol mono-n-butyl ether, triethylene glycol mono-n-butyl ether, propylene glycol mono-n-butyl ether and dipropylene glycol mono-n-butyl ether and can realize a print having no significant bleeding or feathering.

U.S. Patent No. 5,958,998 relates to an ink composition comprised of from about 20 to about 80 weight percent of water, from about 1 to about 25 weight percent of pigmented polymer, oil soluble colorant, and optionally from about 0.01 to about 30 weight percent of a glycol, and wherein the oil soluble colorant is present in an amount of from about 0.01 to about 30 weight percent of the pigmented polymer.

U.S. Patent No. 5,985,014 relates to an ink for ink-jetting containing at least a coloring material, water soluble organic solvent and water, comprising: a) 0.01-5.0% by weight of an alkylene oxide adduct of acetylene glycol, represented by a given formula (A), b) 6.0-14.0% by weight of a compound selected from the group consisting of a polyalcohol having three hydroxy groups, alkylene glycols represented by a given formula (B), c) 4.0-10.0% by weight of a lower alkyl ether of an alkylene glycol, represented by a given formula (C), d) 2.0-8.0% by weight of a polyalkylene glycol having a molecular weight of 150-600; and e) water, wherein the percent by weight is based on the total weight of the ink.

U.S. Patent No. 5,988,807 relates to a fluorescent valve jet ink containing water, water soluble organic solvents, containing non-purified dyes that have less than 2450 ppm concentration of phosphates, 100,000 ppm concentration of sulfates, less than 500 ppm concentration of nitrates, less than 2 ppm concentration of fluoride, less than 5 ppm concentration of chloride, less than 0.20 concentration of bromide and less than 0.1 ppm concentration of iodine and a penetrating agent solvent system that contains isopropyl alcohol in combination with a surfactant that are inert to materials that comprise the printing mechanism.

U.S. Patent No. 6,004,389 relates to an ink composition comprising a pigment, a glycol ether, and water, the pigment being dispersible and/or soluble in water without the aid of any dispersant, the glycol ether being one member or a mixture of two or more members selected from the group consisting of diethylene glycol mono-n-butyl ether, triethylene glycol mono-n-butyl ether, propylene glycol mono-n-butyl ether, and dipropylene glycol mono-n-butyl ether.

Despite these attempts to achieve an inkjet ink formulation that overcomes the problems associated with inkjet printing, a need still exists for an ink formulation which can realize a durable image having good wet fastness and light fastness.

### SUMMARY OF THE INVENTION

The present invention is directed to a process of drop-on-demand inkjet printing employing an ink formulation comprising 0.5 to 15% by weight of a pigment, 0.5 to 30% by weight of polypropylene glycol, and 55 to 99% by weight of water, wherein the percentages are based on the overall weight of the formulation.

The present invention is also directed to a process of drop-on-demand inkjet printing employing an ink formulation comprising a pigment, polypropylene glycol and water, wherein the minimum ratio of pigment to polypropylene glycol is about 1:1 to about 1:2.5. However, the preferred minimum ratio is about 1:2.

It is another object of the present invention to provide a process of drop-on-demand inkjet printing employing an ink that produces a wet fast and light fast image.

An advantage of a process of drop-on-demand inkjet printing employing the ink formulation of the present invention is that the ink comprises polypropylene glycol as opposed to other known ink formulations which comprise other glycols and their derivatives. The ink formulation of the present invention surprisingly provides good humectancy in addition to good wet fastness and light fastness of the printed ink.

### DESCRIPTION OF THE PREFERRED EMBODIMENTS

The ink formulation of the present invention is particularly suitable for inkjet printing. The formulation of the present invention can be used to print images such as alpha-numeric characters and symbols on any porous or coated non-porous substrate. The substrate includes, but is not limited to, a paper, a film or a fabric. In the case of paper, the paper may be plain paper, recycled paper, or coated paper. The ink formulation of the present invention is suitable for applications such as labels and photograph identifications that require high durability. The ink formulation of the present invention may also be used for printing documents requiring good archival properties since the ink formulation of the present invention is not prone to fading due to its favorable light fastness. Another application for which the present invention is particularly suitable is magnetic character recognition (MICR) printing. Although MICR printing is currently being performed using offset presses, laser printers and impact printers, inkjet printing may be possible using the ink of the present invention.

The ink of the present invention dries quickly to produce a highly durable image. "Durable" in the context of the present invention refers to good wet fastness and good light fastness. "Good wet fastness" may be defined as the ability to resist abrasion without smudging, smearing or removal of ink, when a wet image is rubbed. A print maintaining image integrity for twenty rubbing cycles with a wet cotton swab may be said to have good wet fastness. One cycle is defined as the action of swiping the cotton swab backwards and forwards across the print under test.

"Good light fastness" is defined in relation to the Blue Wool Scale (BWS). The Blue Wool Scale is the industry standard for light fastness. The scale ranges from 1 (very poor) to 8 (very good). As a general guideline, on the Blue Wool Scale, a rating of 1-3 would be considered poor, a rating of 4 would be considered reasonable, a rating of 5-6 would be considered good, and a rating of 7-8 would be considered excellent. For example, a typical dye set has the following ratings on the Blue Wool Scale: yellow is 3, magenta is 2, cyan is 4-5, and black is 3. In the case of pigmented black inks, the colors have ratings similar to those above, but black has a rating of 8 on the Blue Wool Scale.

In order to determine the rating, a print sample is exposed to a Xenon arc lamp until a color change equivalent to Grey Scale 3 is observed on the sample under test. The Xenon arc lamp produces a spread of wavelengths of light that is very similar to sunlight but at higher intensity, i.e. visible light and ultraviolet (UV) light. Typically, UV light is responsible for most of the fade observed. At this point, the rating on the Blue Wool Scale that corresponds to a similar degree of color change is noted, and this is the figure given as the light fastness rating. Examples of the minimum ratings on the Blue Wool Scale for some typical applications would be a BWS rating of 1-2 for paper dyes, a BWS rating of 3-4 for publication ink or packaging, a BWS rating of 5-6 for high quality packaging or display material and lower quality wall coverings, and a BWS rating of 7-8 for high quality wall coverings and high performance screen inks. Shown below in Table A is the Blue Wool Scale as provided by Ciba Specialty Chemical Company, a colorant manufacturer.

**Table A**

| Blue Wool Scale | Daylight in Basle (Approx. days) | 6Kw Xenon Lamp (Approx. hours) | KiloLangley (Approx.) |
|---|---|---|---|
| 1 | 1 | 3 | 0.247 |
| 2 | 2 | 5 | 0.493 |
| 3 | 6 | 13 | 1.479 |
| 4 | 24 | 80 | 5.916 |
| 5 | 42 | 120 | 10.353 |
| 6 | 88 | 240 | 21.692 |
| 7 | 236 | 600 | 58.174 |
| 8 | 925 | - | 228.012 |

| | | | |
|---|---|---|---|
| 1 Year in Basle = 90KLy = 367 Kwsec/cm² 1 Day = 0.246KLy | | | |

An advantage of the ink of the present invention is that it performs reliably in an inkjet printer without any clogging of the printhead nozzles due to drying. "Good reliability" may be defined as maintaining optimal image quality regardless of the printer duty cycle (i.e. such that the ink in the printer does not exceed its de-cap time while idle or in normal use). In no instance should a nozzle fire and not produce a drop due to excessive drying of the ink in the nozzle. "De-cap time" may be defined as the length of time that a nozzle maybe left open to the atmosphere (uncapped) before a firing pulse will not generate a drop from that nozzle. "Dwell time" may be defined as the length of time that a printer maybe left idle before the print quality is noticeably degraded. A typical dwell experiment involves taking a print sample, leaving the printer idle for a period of time, then taking a second print sample and examining it to ensure that no droplets are missing. The length of the idle time is varied from a few minutes to several weeks to account for the different maintenance routines operating within the printer.

To achieve reliable printer performance, an ingredient such as a humectant is typically added to an ink to prevent the ink from drying in the nozzles of the printhead. A humectant is typically a low volatility, high boiling point liquid. Examples of humectants are glycols, ethylene glycol, propylene glycol, diethylene glycols, glycerine, triethylene glycol, propylene glycol, dipropylene glycols, tripropylene glycol, polyethylene glycol, polypropylene glycols, 1,3-propylene glycol, isopropylene glycol, isobutylene glycol, 1,4-butanediol, 1,3-butanediol, 1,5-pentanediol, 1,6-hexanediol, glycerin, meso-erythritol, pentaerythritol, thiodiglycol, 1,4-butanediol, 1,5-pentanediol, 1,6-hexanediol, neopentyl glycol, 2-methyl-2,4-pentanediol, trimethylolpropane, trimethylolethane, amides, ethers, carboxylic acids, esters, alcohols, organosulfides, organosulfoxides, alcohol derivatives, carbitol, butyl carbitol, cellusolve, ether derivatives, amino alcohols, ketones, N-methylpyrrolidinone, 2-pyrrolidone, cyclohexylpyrrolidone, hydroxyethers, sulfoxides such as dimethyl sulfoxide, lactones, N-methyl-2-pyrrolidone, 1,2,-dimethyl-2-imidazolidinone, glycol ethers, such as ethylene glycol monomethyl ether, ethylene glycol monoethyl ether, ethylene glycol monobutyl ether, ethylene glycol monomethyl ether acetate, diethylene glycol monomethyl ether, diethylene glycol monoethyl ether, diethylene glycol mono-n-propyl ether, ethylene glycol mono-iso-propyl ether, diethylene glycol mono-iso-propyl ether, ethylene glycol mono-n-butyl ether, ethylene glycol-mono-t-butyl ether, diethylene glycol mono-t-butyl ether, 1-methyl-1-methoxy butanol, propylene glycol monomethyl ether, propylene glycol monoethyl ether, propylene glycol mono-t-butyl ether, propylene glycol mono-n-propyl ether, propylene glycol mono-iso-propyl ether, dipropylene glycol monomethyl ether, dipropylene glycol monoethyl ether, dipropylene glycol mono-n-propyl ether, and dipropylene glycol mono-iso-propyl ether.

A disadvantage associated with the use of humectants is that they typically prevent an image from being wet fast. However, surprisingly, the use of polypropylene glycol as a humectant in the ink formulation of the present invention provides both very reliable printer performance and maintains very good wet fastness and light fastness of the printed image. A polypropylene glycol having a molecular weight of greater than 250 to about 1000 is preferred. Most preferred is a polypropylene glycol having a molecular weight of 425.

Currently, in inkjet printing, the majority of colors (yellow, magenta and cyan) are dye based and as a result have poor light fastness. Dye based systems typically exhibit poor wet fastness. Pigments are not typically used in inkjet printers as a pigmented ink is usually less reliable. Pigmented inks have an increased tendency to clog the nozzles of the printhead. Typically, pigments dry more rapidly as they are dispersed as solid particles and as a result create a lot of surface area from which a solvent may evaporate. Also, once dried, redispersing a pigment requires much more energy and is, therefore, more difficult than redissolving a dye. However, in the present invention the use of polypropylene glycol (PPG) in conjunction with a pigment produces a highly reliable pigmented ink that also maintains good wet fastness upon printing. A disadvantage of using humectants other than polypropylene glycol is that the use of those other humectants requires a higher humectant concentration, which typically reduces the amount of pigment that can be used for a given ink viscosity. As a result, the optical density (strength) of the colors printed is reduced, and the drying time may be increased. Furthermore, those other humectants will either produce a reliable ink or a wet fast ink, but not both a wet fast and reliable ink. Thus, surprisingly the pigmented ink formulation of the present invention is reliable in inkjet printing and yet produces highly wet fast and light fast images.

The ink formulation of the present invention comprises about 0.5 to 15% by weight of a pigment, about 0.5 to 30% by weight of polypropylene glycol, and about 55 to 99% by weight of water, wherein the percentages are based on the overall weight of the formulation. Preferably, the ink formulation comprises about 1.5 to 7% by weight of pigment, about 3 to 14% by weight of polypropylene glycol, and about 60 to 95.5% by weight of water.

Another embodiment of the present invention is an ink formulation comprising a pigment, polypropylene glycol, and water, wherein the minimum ratio of pigment to polypropylene glycol is about 1:1 to about 1:2.5. The "minimum ratio" is defined as the lowest ratio of pigment to polypropylene glycol resulting in good dwell performance. The preferred minimum ratio of pigment to polypropylene glycol is about 1:2. However, it is within the teachings of the present invention for the ratio of pigment to polypropylene glycol to be, for example, 1:3, 1:4 and higher.

Pigments suitable for use in the present invention include, but are not limited to, organic and inorganic pigments. Organic pigments suitable for use in the present invention include, but are not limited to, C.I. Pigment Yellow 1-6, 9, 10, 12-14, 16, 17, 24, 55, 61-63, 65, 73-75, 81, 83, 87, 93-95, 97, 100, 101, 104, 105, 108-111, 115, 116, 119, 120, 126-130, 133, 134, 136, 138, 139, 142, 147, 148, 150-155, 165-170, 172-176, 180-183, 185, 188, 190-200, 202-206; C.I. Pigment Orange 1, 2, 5, 13, 16, 17, 19, 22, 24, 34, 36, 38, 39, 43, 46, 48, 49, 61, 62, 64, 65, 67-74, 77, 79; C.I. Pigment Red 1-6, 8, 9, 12, 14, 15, 16, 17, 21, 22, 23, 31, 32, 37, 38, 41, 47-50, 52, 53, 57, 58, 60, 63, 64, 68, 69, 81, 83, 88, 90, 112, 114, 122, 123, 144, 146, 147, 149, 150, 151, 166, 168-170, 172-179, 181, 184, 185, 187, 188, 190, 193, 194, 200, 202, 206-211, 213, 214, 216, 220, 221, 224, 237, 238, 239, 242, 243, 245, 247, 249, 250, 251, 253, 254, 255-258, 260, 262, 263, 264, 266-274; C.I. Pigment Violet 1-3, 5, 19, 23, 25, 27, 29, 31, 32, 37, 39, 42, 44, 50; C.I. Pigment Blue 1, 9, 14, 15, 16, 17, 24, 25, 56, 60-63, 66, 68, 75, 76, 78, 79; C.I. Pigment Green 1, 2, 4, 7, 8, 13, 36, 45, 54; C.I. Pigment Brown 1, 22, 23, 25, 27, 30, 41, 42; and C.I. Pigment Black 1, 31, 32. Inorganic pigments suitable for use in the present invention include, but are not limited to, C.I. Pigment Yellow 31, 32, 34-37, 40-43, 48, 53, 157-164, 184, 189, 207, 208; C.I. Pigment Orange 20, 21, 23, 75, 78; C.I. Pigment Red 101, 104, 108, 109, 113, 230-233, 235, 236, 259, 265, 275, 276; C.I. Pigment Violet 14-16, 47, 49; C.I. Pigment Blue 27, 28, 29, 33, 35, 36, 71-74; C.I. Pigment Green 14, 15, 17-19, 26, 48, 50, 51, 55; C.I. Pigment Brown 6, 9, 11, 24, 29, 31, 33-35, 37, 39, 40, 43-45; C.I. Pigment Black 6, 7-14, 22-30, 33-35; and C.I. Pigment White 4-7, 18-20, 22, 25-28, 31. Preferred pigments suitable for use in the present invention include, but are not limited to, pigments specifically produced for inkjet printing such as the Microlith product line commercially available from Ciba Specialty Chemical Company, the Hostafine product line commercially available from Clariant, the AcryJet product line commercially available from PolyTribo and the Cab-O-Jet product line commercially available from Cabot.

Additives may be present in the ink formulations of the present invention and include, but are not limited to, co-solvents, bases, surfactants, deaerators, and biocides. Examples of suitable co-solvents are isopropyl alcohol and 2-pyrrolidinone. An example of a suitable base is morpholine. Examples of suitable surfactants are Dynol 604 (an ethoxylated acetylinic diol), Surfadone LP100 and Surfynol DF75, commercially available from Air Products.

The ink formulation of the present invention which comprises a pigment, polypropylene glycol, and water can be prepared by various methods. In one embodiment, the ink formulation may be produced by creating a dispersion of pigment, polypropylene glycol, and water. The dispersion may additionally comprise additives such as a surfactant, a base, a biocide or a co-solvent. The dispersion may be milled by conventional means, for example, with milling equipment such as a ball or bead mill. However, the milling time would depend upon the efficiency of the mill and the initial form of the pigment (i.e. if the particles are initially clumped together or in a fine particle form). A "letdown" solvent solution may be prepared and then used to adjust the dispersion to the desired viscosity to achieve the above ink formulation. The letdown solvent may comprise, for example, a co-solvent and water.

### EXAMPLE 1

A group of dispersions were prepared as set forth in Tables 1-4. All percentages were percentages by weight and were based on the overall weight of the dispersion.

**Table 1: Dispersion #1**

| | |
|---|---|
| 15.0% | Microlith Yellow 2R-WA (supplied by Ciba) |
| 1.2% | Dynol 604 (supplied by Air Products) |
| 12.0% | isopropyl alcohol (IPA) (supplied by Sigma-Aldrich) |
| 70.8% | water |
| 1.0% | morpholine (supplied by Sigma-Aldrich) |

**Table 2: Dispersion #2**

| | |
|---|---|
| 15.0% | Microlith Magenta B-WA (supplied by Ciba) |
| 1.2% | Dynol 604 (supplied by Air Products) |
| 12.0% | isopropyl alcohol (IPA) (supplied by Sigma-Aldrich) |
| 70.8% | water |
| 1.0% | morpholine (supplied by Sigma-Aldrich) |

**Table 3: Dispersion #3**

| | |
|---|---|
| 15.0% | Microlith Blue 4G-WA (supplied by Ciba) |
| 1.2% | Dynol 604 (supplied by Air Products) |
| 12.0% | isopropyl alcohol (IPA) (supplied by Sigma-Aldrich) |
| 70.8% | water |
| 1.0% | morpholine (supplied by Sigma-Aldrich) |

**Table 4: Dispersion #4**

| | |
|---|---|
| 15.0% | Microlith Black C-WA (supplied by Ciba) |
| 1.2% | Dynol 604 (supplied by Air Products) |
| 12.0% | isopropyl alcohol (IPA) (supplied by Sigma-Aldrich) |
| 70.7% | water |
| 1.1% | morpholine (supplied by Sigma-Aldrich) |

The method involved in the production of each of these dispersions was as follows. The solvents were added to a vessel and mixed. While mixing, the pigment was slowly added to the vessel to avoid clumping. The mixture was mixed for an additional thirty minutes. The physical properties were checked. If particles were present at greater than 1 um, the mixture was mixed for an additional fifteen to thirty minutes. The dispersions were prepared such that the particle size was less than 1 um and the pH was 8.3 to 8.8. The maximum particle size was measured using a Hegman gauge. The mixing equipment used was a Silverson L4R High Speed High Shear (HSHS) mixer with a dispersion screen installed. Another solution was prepared which was referred to as Letdown D. Letdown D was comprised of 6.6% isopropyl alcohol (IPA) and 93.4% water. A series of ink formulations was prepared as set forth in Tables 5-8 using the dispersions and Letdown D. All percentages were percentages by weight and were based on the overall weight of the formulation.

**Table 5: Ink Formulation #1a**

| | |
|---|---|
| 26.7% | Dispersion #1 (Yellow) |
| 8.0% | polypropylene glycol (PPG) (mol. wt. 425) |
| 65.3% | Letdown D |

**Table 6: Ink Formulation #2a**

| | |
|---|---|
| 26.7% | Dispersion #2 (Magenta) |
| 8.0% | polypropylene glycol (PPG) (mol. wt. 425) |
| 65.3% | Letdown D |

**Table 7: Ink Formulation #3a**

| | |
|---|---|
| 26.7% | Dispersion #3 (Cyan) |
| 8.0% | polypropylene glycol (PPG) (mol. wt. 425) |
| 65.3% | Letdown D |

**Table 8: Ink Formulation #4a**

| | |
|---|---|
| 26.7% | Dispersion #4 (Black) |
| 8.0% | polypropylene glycol (PPG) (mol. wt. 425) |
| 65.0% | Letdown D |
| 0.3% | Surfynol DF75 (supplied by Air Products) |

For each of these ink formulations, Letdown D was added to the dispersion while mixing. Polypropylene glycol and any other components were added while mixing. The mixture was mixed for an additional fifteen minutes. The physical properties were checked, namely viscosity, pH, surface tension and particle size. The ink was filtered to a particle size of 1 um. In each formulation, the viscosity at 25°C was 3.0 to 3.5 centipoise. The viscosity was measured at a temperature of 25°C using a Brookfield DV-II+ viscometer with a UL adapter. The pH was 8.2 to 8.7. The pH was measured using a pH meter. The surface tension was 30.0 to 33.0 dynes/cm. Surface tension was measured using a surface and interfacial tension torsion balance - Model OS from White Electrical. The mixing equipment used was a Silverson L4R High Speed High Shear (HSHS) mixer with a general purpose mixing screen installed. The maximum particle size was measured using a Hegman gauge.

Thus, the final ink formulations which were a combination of the dispersion and letdown formulations were as set forth in Tables 9-12.

**Table 9: Ink Formulation #1b**

| | |
|---|---|
| 4.00% | Microlith Yellow 2R-WA |
| 0.32% | Dynol 604 |
| 7.51% | isopropyl alcohol (IPA) |
| 79.89% | water |
| 0.28% | morpholine |
| 8.00% | polypropylene glycol (PPG) (mol. wt. 425) |

**Table 10: Ink Formulation #2b**

| | |
|---|---|
| 4.00% | Microlith Magenta B-WA |
| 0.32% | Dynol 604 |
| 7.51% | isopropyl alcohol (IPA) |
| 79.89% | water |
| 0.28% | morpholine |
| 8.00% | polypropylene glycol (PPG) (mol. wt. 425) |

**Table 11: Ink Formulation #3b**

| | |
|---|---|
| 4.00% | Microlith Blue 4G-WA |
| 0.32% | Dynol 604 |
| 7.51% | isopropyl alcohol (IPA) |
| 79.89% | water |
| 0.28% | morpholine |
| 8.00% | polypropylene glycol (PPG) (mol. wt. 425) |

**Table 12: Ink Formulation #4b**

| | |
|---|---|
| 4.00% | Microlith Black C-WA |
| 0.32% | Dynol 604 |
| 7.49% | isopropyl alcohol (IPA) |
| 79.59% | water |
| 0.30% | morpholine |
| 8.00% | polypropylene glycol (PPG) (mol. wt. 425) |
| 0.30% | Surfynol DF75 |

### EXAMPLE 2

A black ink was prepared having the formulation (referred to as Ink Formulation #5) as set forth in Table 13.

**Table 13: Ink Formulation #5a**

| | |
|---|---|
| 33.1 % | Cab-O-Jet 300 (supplied by Cabot)* |
| 7.5% | isopropyl alcohol (IPA) |
| 0.3% | Dynol 604 |
| 8.0% | polypropylene glycol (PPG) (mol. wt. 425) |
| 51.1 % | water |

| | |
|---|---|
| The * indicates that Cab-O-Jet 300, commercially available from Cabot, was supplied as an aqueous dispersion containing 15% solids (carbon black pigment) as such, Ink Formulation #5a was recalculated as Ink Formulation #5b to show the true solid pigment content and is shown in Table 14. | |

**Table 14: Ink Formulation #5b**

| | |
|---|---|
| 5.0% | carbon black pigment |
| 7.5% | isopropyl alcohol |
| 0.3% | Dynol 604 |
| 8.0% | polypropylene glycol (mol. wt. 425) |
| 79.2% | water |

The ink formulation was prepared by adding solvents to a vessel and mixing. While mixing, the pigment was added to the vessel. The mixture was mixed for an additional fifteen minutes. The mixing equipment used was a Silverson L4R High Speed High Shear (HSHS) mixer with a general purpose mixing screen installed. The physical properties were measured, namely viscosity and surface tension. The viscosity at 25°C was 2.6 to 3.0 centipoise. The viscosity was measured at a temperature of 25°C using a Brookfield DV-II+ viscometer with a UL adapter. The surface tension was 29.0 to 31.0 dynes/cm. Surface tension was measured using a surface and interfacial tension torsion balance - Model OS from White Electrical.

### EXAMPLE 3

The following humectants were tested at a 5% addition by weight to an ink formulation (referred to as Ink Formulation #6 as set forth in Table 15)

**Table 15: Ink Formulation #6**

| | |
|---|---|
| 5.00% | Microlith Blue 4G-WA |
| 0.40% | Dynol 604 |
| 12.27% | isopropyl alcohol |
| 78.00% | water |
| 4.33% | morpholine |

for dwell performance in a SourceJet 5000C inkjet printer commercially available from Source Technologies, Inc. Table 16 sets forth the dwell performance. The numerical value given refers to the percentage of jets remaining operational after the dwell period. One-hundred percent was desired.

**Table 16**

| Dwell time | 1 min | 2 mins | 3 mins | 10 mins |
|---|---|---|---|---|
| No humectant | 10% | 1% | 0% | 0% |
| 1,2 Propanediol | 80% | 85% | 70% | 30% |
| Polypropylene glycol (PPG) (mol. wt. 425) | 100% | 100% | 100% | 100% |
| N-methyl pyrrolidone (NMP) | 80% | 50% | 40% | 2% |
| 2-pyrrolidone | 50% | 60% | 25% | 0% |
| Glycerol | 50% | 50% | 25% | 4% |
| Polyethylene glycol (PEG) (mol. wt. 300PEG) | 70% | 80% | 55% | 4% |

### EXAMPLE 4

The ratio of pigment to polypropylene glycol used was optimized. Table 17 represents the pigment to polypropylene glycol (PPG) ratio optimization.

**Table 17**

| | Ink Formulation #7 | Ink Formulation #8 | Ink Formulation #9 | Ink Formulation #10 |
|---|---|---|---|---|
| Pigment to PPG ratio | 1:3 | 1:2 | 1:1.5 | 1:1 |
| Microlith Blue 4G-WA | 3.38% | 3.38% | 3.38% | 3.38% |
| PPG 425 | 10% | 6.75% | 5.06% | 3.38% |
| Water | 71.37% | 74.07% | 75.48% | 76.88% |
| Morpholine | 3.92% | 4.06% | 4.13% | 4.20% |
| IPA | 11.07% | 11.47% | 11.68% | 11.89% |
| Dynol 604 | 0.27% | 0.27% | 0.27% | 0.27% |
| Viscosity (cPs) | 4.3 | 3.7 | 3.5 | 3.0 |
| 30mins dwell performance | Good | Good | Borderline | Poor |

| | | | | |
|---|---|---|---|---|
| "Good" means that all jets were operational. "Borderline" means that some jets did not start up initially but were eventually operational. "Poor" means that some jets did not start up initially and were never operational. The optimum ratio of pigment to PPG was determined to be 1:2. | | | | |

### EXAMPLE 5

Wet fastness tests were conducted on a coated non-porous substrate. Sample images were printed to vinyl label stock commercially available from Electronic Label Technology coated with XenCoat01, an inkjet coating solution commercially available from Source Technologies, Inc. The samples were then tested for wet fastness using a cotton swab dipped in distilled water and rubbed backwards and forwards across the image until the color strength was reduced to <10% of the original strength as determined by visual inspection. Ink Formulation # 11, having a viscosity of 3.15 centipoise at 25°C and a surface tension of 30.0 dynes/cm, was used. Ink Formulation #11 is set forth in Table 18.

**Table 18: Ink Formulation # 11 I**

| | |
|---|---|
| 5.00% | Microlith Black C-WA |
| 0.40% | Dynol 604 |
| 12.27% | isopropyl alcohol |
| 78.00% | water |
| 4.33% | morpholine |

Ink Formulation # 12, having a viscosity of 2.71 centipoise at 25°C, was also used and is set forth in Table 19.

**Table 19: Ink Formulation # 12**

| | |
|---|---|
| 4.00% | Microlith Black C-WA |
| 0.32% | Dynol 604 |
| 7.51% | isopropyl alcohol |
| 79.87% | water |
| 0.30% | morpholine |
| 8.00% | polyethylene glycol (PEG) (mol. wt. 300) (supplied by Sigma-Aldrich) |

The results of the wet fastness tests are set forth below in Table 20.

**Table 20**

| | Ink Formulation #11 (No humectant) | Ink Formulation #4b (PPG) | Ink Formulation #12 (PEG) |
|---|---|---|---|
| Wet fastness | 40 cycles | 50 cycles | 10 cycles |

### EXAMPLE 6

Wet fastness tests were conducted on a porous substrate without a coating. Sample images were printed to white copy paper 20 1b (75 g/m²) commercially available from Office Depot. The samples were then tested for wet fastness using a cotton swab dipped in distilled water and rubbed backwards and forwards across the image until the color strength was reduced to <10% of the original strength as determined by visual inspection. Ink Formulations # 1b, 2b, 3b and 4b were used. Each ink formulation had the following viscosity and surface tension, respectively.
Ink Formulation # 1b: 3.27cPs, 31.5dynes/cm
Ink Formulation # 2b: 3.26cPs, 31.5dynes/cm
Ink Formulation # 3b: 3.19cPs, 32.0dynes/cm
Ink Formulation # 4b: 3.27cPs, 32.0dynes/cm
The results of the wet fastness tests are set forth in Table 21.

**Table 21: Wet fastness**

| | Cyan - Ink Formulation #3b | Magenta - Ink Formulation #2b | Yellow - Ink Formulation #1b | Black - Ink Formulation #4b |
|---|---|---|---|---|
| Wet fastness | >20* cycles | >20* cycles | >20* cycles | >20* cycles |

| | | | | |
|---|---|---|---|---|
| The * indicates the paper substrate was destroyed at 20 cycles; however, there was no sign of ink bleed or removal. A second sample which was placed under running tap water and then soaked for twenty-four hours showed no loss of ink, bleed or smear (i.e. very good wet fastness). | | | | |

### EXAMPLE 7

Different molecular weight polypropylene glycols were tested. Polypropylene glycols of varying molecular weights were substituted for polypropylene glycol having a molecular weight of 425 in Ink Formulation #2b. Print samples were prepared on vinyl label stock from Graphic Technology, Inc. coated with XenCoatLC03 which is commercially available from Source Technologies, Inc. The results are set forth in Table 22.

**Table 22**

| Molecular Weight | 425 (Ink Formulation #2b) | 725 | 1000 | 2000 | 2700 | 3500 |
|---|---|---|---|---|---|---|
| 20 mins dwell performance | Good | Good | Borderline | Poor | Poor | Poor |
| Wet fastness (cycles) | 100 | 75 | 25 | 80 | 100 | 100 |

### EXAMPLE 8

An ink formulation was prepared which is hereinafter referred to as Ink Formulation # 13a.

**Table 23: Ink Formulation #13a**

| | |
|---|---|
| 33.1 g | (42.0%) of Cab-O-Jet 300* |
| 8.0 g | (10.1%) polypropylene glycol (mol. wt. 425) |
| 37.8 g | (47.9%) water |

| | |
|---|---|
| The * indicates that Cab-O-Jet 300, commercially available from Cabot, was supplied as an aqueous dispersion containing 15% solids (carbon black pigment). As such, Ink Formulation #13a was recalculated as Ink Formulation #13b to show the true solid pigment content and is shown in Table 24. | |

**Table 24: Ink Formulation #13b**

| | |
|---|---|
| 6.3% | carbon black pigment |
| 10.1% | polypropylene glycol (mol. wt. 425) |
| 83.6% | water |

Print samples were prepared as in Example 7. The wet fastness of the samples was tested and the results, set forth in Table 25 below, demonstrate good wet fastness.

**Table 25**

| | Cab-O-Jet/PPG/Water |
|---|---|
| 20 mins dwell performance | Good |
| Wet fastness (cycles) | 50 |

### COMPARATIVE EXAMPLE 1

Diethylene glycol mono-n-butyl ether was substituted for polypropylene glycol having a molecular weight of 425 in Ink Formulation #2b. Print samples were prepared as in Example 7. The wet fastness and dwell performance of the samples were tested and compared to Ink Formulation #2b. Ink Formulation #2b had good dwell performance whereas the diethylene glycol mono-n-butyl ether formulation had poor dwell performance. The comparative results are set forth below in Table 26.

**Table 26**

| | PPG 425 (Ink Formulation #2b) | Diethylene glycol mono-n-butyl ether |
|---|---|---|
| 20 mins dwell performance | Good | Poor |
| Wet fastness (cycles) | 100 | 90 |

### COMPARATIVE EXAMPLE 2

Diethylene glycol mono-n-butyl ether was substituted for polypropylene glycol having a molecular weight of 425 in Ink Formulation #2b. Print samples were prepared as in Example 7. The dwell performance and wet fastness of the samples were tested at 8% diethylene glycol mono-n-butyl ether and compared to Ink Formulation #2b. A further 8% diethylene glycol mono-n-butyl ether was added to the ink already containing the 8% diethylene glycol mono-n-butyl ether to produce an ink containing a total 16% diethylene glycol mono-n-butyl ether. Ink Formulation #2b had good wet fastness and dwell performance whereas the formulation with 8% diethylene glycol mono-n-butyl ether had poor dwell performance and the formulation with 16% diethylene glycol mono-n-butyl ether had borderline dwell performance. The comparative results are set forth below in Table 27.

**Table 27**

| | PPG 425 Ink Formulation #2b | 8% Diethylene glycol mono-n-butyl ether | 16% Diethylene glycol mono-n-butyl ether |
|---|---|---|---|
| 20mins dwell performance | Good | Poor | Borderline |
| Wet fastness (cycles) | 100 | 90 | 100 |

### COMPARATIVE EXAMPLE 3

Experiments were conducted to compare the light fastness of Ink Formulations # 1b, 2b, 3b, and 4b with commercially available inkjet inks from Epson, namely black S020187 cartridge and color S020191 cartridge. Print samples were taken using an Epson inkjet printer from Epson and a SourceJet 5000C inkjet printer from Source Technologies, Inc. onto Document Control Solutions paper stock (Part No. 170173 WaterGuard sheeted -- bright white). Each of the cyan, magenta, yellow and black color formulations were tested, with half of the color bar exposed and half covered for reference. Samples were exposed to a Xenon arc lamp for 100 hours and checked every 20 hours for first detectable fade as determined visually. The results of the test are set forth in Table 28. It can be seen from the results that the ink formulations of the present invention exhibited no fading or only slight fading as compared to the Epson inks where there was significant fading in all colors.

**Table 28: Light fastness**

| Exposure time | Ink Formulations # 1 b, 2b, 3b, and 4b | Epson inks |
|---|---|---|
| 20 hours | No fade | Significant fade all colors |
| 40 hours | No fade | Significant fade all colors |
| 60 hours | No fade | Significant fade all colors |
| 80 hours | Slight fade detected - Magenta only | Significant fade all colors |
| 100 hours | Slight fade detected - Magenta only | Significant fade all colors |

### EXAMPLE 9

Each ink formulation below was prepared by adding the solvents to a vessel and mixing. While mixing, the pigment was added to the vessel. The mixture was mixed for an additional fifteen minutes. The mixing equipment used was a Silverson L4R High Speed High Shear (HSHS) mixer with a general purpose mixing screen installed.

**Table 29: Ink Formulation #14a**

| | |
|---|---|
| Cab-O-Jet Cyan^{*1} | 21.58 |
| Ethylene glycol | 26.00 |
| PPG 425 | 4.60 |
| 2-pyrrolidinone | 2.00 |
| Surfadone LP100 | 1.00 |
| Dynol 604 | 0.20 |
| Water | 44.62 |

**Table 30: Ink Formulation #15a**

| | |
|---|---|
| Cab-O-Jet Magenta^{*1} | 25.49 |
| Ethylene glycol | 26.00 |
| PPG 425 | 4.60 |
| 2-pyrrolidinone | 2.00 |
| Surfadone LP 100 | 1.00 |
| Dynol 604 | 0.20 |
| Water | 40.71 |

**Table 31: Ink Formulation #16a**

| | |
|---|---|
| Cab-O-Jet Yellow^{*1} | 18.60 |
| Ethylene glycol | 30.00 |
| PPG 425 | 4.60 |
| 2-pyrrolidinone | 2.00 |
| Surfadone LP 100 | 1.00 |
| Dynol 604 | 0.20 |
| Water | 43.60 |

| | |
|---|---|
| The *1 indicates that the Cab-O-Jet colorant, commercially available from Cabot, was supplied as an aqueous dispersion containing 10% solids (pigment). As such, Ink Formulations # 14a, 15a and 16a were recalculated as Ink Formulations #14b, 15b and 16b, respectively, to show the true solid pigment content as shown in Tables 32, 33 and 34. | |

**Table 32: Ink Formulation #14b**

| | |
|---|---|
| 2.16% | cyan pigment |
| 4.6% | polypropylene glycol (mol. wt. 425) |
| 64% | water |
| 26% | ethylene glycol |
| 2% | 2-pyrrolidinone |
| 1% | Surfadone LP 100 |
| 0.2% | Dynol 604 |

**Table 33: Ink Formulation #15b**

| | |
|---|---|
| 2.55% | magenta pigment |
| 4.6% | polypropylene glycol (mol. wt. 425) |
| 63.6% | water |
| 26% | ethylene glycol |
| 2% | 2-pyrrolidinone |
| 1% | Surfadone LP100 |
| 0.2% | Dynol 604 |

**Table 34: Ink Formulation #16b**

| | |
|---|---|
| 1.86% | yellow pigment |
| 4.6% | polypropylene glycol (mol. wt. 425) |
| 60.3% | water |
| 30% | ethylene glycol |
| 2% | 2-pyrrolidinone |
| 1% | Surfadone LP 100 |
| 0.2% | Dynol 604 |

### EXAMPLE 10

The dwell performance of Ink Formulations # 14a, 15a, and 16a, recalculated as Ink Formulations # 14b, 15b and 16b, respectively, were tested in a SourceJet 6000 thermal drop on demand inkjet printer, as shown in Table 35. In each case, the numerical value given refers to the percentage of jets remaining operational after the dwell (idle) period was recorded. One-hundred percent was desired.

**Table 35**

| **Dwell Time** | **1 min** | **15 min** | **30 min** | **1 hour** | **8 hrs** | **24hrs** |
|---|---|---|---|---|---|---|
| Ink Formulation # 14b: Cyan ink | 100% | 100% | 100% | 100% | 100% | 100% |
| Ink Formulation # 15b: Magenta ink | 100% | 100% | 100% | 100% | 100% | 100% |
| Ink Formulation # 16b: Yellow ink | 100% | 100% | 100% | 100% | 100% | 100% |

### EXAMPLE 11

Wet fastness tests were conducted on a coated non-porous substrate. Sample images were printed to vinyl label stock (ST vinyl) commercially available from Source Technologies, Inc. The test method employed a tissue soaked with water rubbed side to side in a steady motion, 25 wipes. The samples were then visually inspected and rated as:
Excellent - No discernable removal of the ink or coating;
Satisfactory - Very little removal of the ink or coating, some smear;
Marginal - Some of ink or coating removed or smeared;
Poor - Significant ink or coating removed or smeared;
Unacceptable - Most of ink or coating removed or smeared;
Ink Formulations #14b, 15b and 16b were used. The viscosity and surface tension of each formulation were also measured. The viscosity was measured at a temperature of 25°C using a Brookfield DV-II+ viscometer with a UL adapter. The surface tension was measured using a surface and interfacial tension torsion balance - Model OS from White Electrical. The results were as follows:
Ink Formulation # 14b: 2.9 cPs, 31 dynes/cm
Ink formulation # 15b: 3.2 cPs, 31 dynes/cm -
Ink Formulation # 16b: 3.2 cPs, 31 dynes/cm
The results of the wet fastness tests are set forth in Table 36.

**Table 36: Wet Fastness**

| Ink | Wet fastness |
|---|---|
| Ink Formulation # 14b: Cyan | Excellent |
| Ink Formulation # 15b: Magenta | Excellent |
| Ink Formulation # 16b: Yellow | Excellent |

It will therefore be readily understood by those persons skilled in the art that the present invention is susceptible of broad utility and application.

## Claims

1. A process of drop-on-demand inkjet printing employing
an ink formulation comprising:
0.5 to 15% by weight of a pigment,
0.5 to 30% by weight of polypropylene glycol, and
55 to 99% by weight of water, wherein the percentages are based on the overall weight of the ink formulation.

2. The process as claimed in claim 1, wherein the ink formulation comprises:
1.5 to 7% by weight of the pigment,
3 to 14% by weight of the polypropylene glycol, and
60 to 95.5% by weight of the water.

3. The process as claimed in claim 1, wherein the ink formulation further comprises at least one additive.

4. The process as claimed in claim 3, wherein the additive is selected from the group consisting of co-solvents, bases, surfactants, deaerators and biocides.

5. The process as claimed in claim 1, wherein the polypropylene glycol has a molecular weight of greater than 250 to 1000.

6. The process as claimed in claim 1, wherein the polypropylene glycol has a molecular weight of 425 to 1000.

7. The process as claimed in claim 4, wherein the co-solvent is isopropyl alcohol or 2-pyrrolidinone.

8. The process as claimed in claim 1, wherein the formulation has a ratio of pigment to polypropylene glycol of at least 1: 1.

9. The process as claimed in claim 1, wherein the formulation has a minimum ratio of pigment to polypropylene glycol of 1:1 to 1:2.5.

10. A process of drop-on-demand inkjet printing employing
an ink formulation comprising:
a pigment,
polypropylene glycol, and
water,
wherein the ink formulation has a minimum ratio of pigment to polypropylene glycol of 1:1 to 1:2.5.

11. The process as claimed in claim 10, wherein the ink formulation further comprises at least one additive.

12. The process as claimed in claim 11, wherein the additive is selected from the group consisting of co-solvents, bases, surfactants, deaerators and biocides.

13. The process as claimed in claim 12, wherein the co-solvent is isopropyl alcohol or 2-pyrrolidinone.

14. The process as claimed in claim 10, wherein the polypropylene glycol has a molecular weight of greater than 250 to 1000.

15. The process as claimed in claim 10, wherein the polypropylene glycol has a molecular weight of 425 to 1000.

16. The process as claimed in claim 10, wherein the minimum ratio of pigment to polypropylene glycol is 1:2.

17. The process as claimed in claim 1, wherein the ink formulation comprises:
0.5 to 15% by weight of a pigment,
0.5 to 30% by weight of polypropylene glycol, and
55 to 99% by weight of water, wherein the percentages are based on the overall weight of the ink formulation and wherein the ink formulation has a ratio of pigment to polypropylene glycol of at least 1:1.

18. The process as claimed in claim 1, wherein the ratio of pigment to polypropylene glycol is 1:2.

19. The process as claimed in claim 1, wherein the ink formulation comprises:
2.5 to 7% by weight of the pigment,
4 to 14% by weight of the polypropylene glycol, and
79 to 93.5% by weight of the water.

## Patentansprüche

1. Verfahren zur Erzeugung eines Druckbildes mittels einer Tintenstrahl-Technologie, bei der die Tröpfchen auf Anforderung erzeugt werden und die eine Tinten-Formulierung verwendet, welche umfasst:
0,5 - 15 Gew.-% eines Pigments,
0,5 - 30 Gew.-% Polypropylenglykol, und
55 - 99 Gew.-% Wasser,
wobei die Prozentangaben auf dem Gesamtgewicht der Tinten-Formulierung beruhen.

2. Verfahren nach Anspruch 1, wobei die Tinten-Formulierung umfasst:
1,5 - 7 Gew.-% des Pigments,
3 - 14 Gew.-% Polypropylenglykol, und
60 - 95,5 Gew.-% Wasser.

3. Verfahren nach Anspruch 1, wobei die Tinten-Formulierung darüber hinaus mindestens einen Zusatzstoff umfasst.

4. Verfahren nach Anspruch 3, wobei der Zusatzstoff aus der Gruppe ausgewählt wird, die aus Co-Lösungsmitteln, Basen, grenzflächenaktiven Mitteln, entgasenden Mitteln und Bioziden besteht.

5. Verfahren nach Anspruch 1, wobei das Polypropylenglykol ein Molekulargewicht von mehr als 250 bis 1.000 aufweist.

6. Verfahren nach Anspruch 1, wobei das Polypropylenglykol ein Molekulargewicht von 425 bis 1.000 aufweist.

7. Verfahren nach Anspruch 4, wobei das Co-Lösungsmittel Isopropylalkohol oder 2-Pyrrolidinon darstellt.

8. Verfahren nach Anspruch 1, wobei die Formulierung ein Verhältnis des Pigments zu dem Polypropylenglykol von mindestens 1 : 1 aufweist.

9. Verfahren nach Anspruch 1, wobei die Formulierung ein Mindest-Verhältnis des Pigments zu dem Polypropylenglykol von 1 : 1 bis 1 : 2,5 aufweist.

10. Verfahren zur Erzeugung eines Druckbildes mittels einer Tintenstrahl-Technologie, bei der die Tröpfchen auf Anforderung erzeugt werden und die eine Tinten-Formulierung verwendet, welche umfasst:
ein Pigment,
Polypropylenglykol, und
Wasser,
wobei die Tinten-Formulierung ein Mindest-Verhältnis des Pigments zu dem Polypropylenglykol von 1 : 1 bis 1 : 2,5 aufweist.

11. Verfahren nach Anspruch 10, wobei die Tinten-Formulierung darüber hinaus mindestens einen Zusatzstoff umfasst.

12. Verfahren nach Anspruch 11, wobei der Zusatzstoff aus der Gruppe ausgewählt wird, die aus Co-Lösungsmitteln, Basen, grenzflächenaktiven Mitteln, entgasenden Mitteln und Bioziden besteht.

13. Verfahren nach Anspruch 12, wobei das Co-Lösungsmittel Isopropylalkohol oder 2-Pyrrolidinon darstellt.

14. Verfahren nach Anspruch 10, wobei das Polypropylenglykol ein Molekulargewicht von mehr als 250 bis 1.000 aufweist.

15. Verfahren nach Anspruch 10, wobei das Polypropylenglykol ein Molekulargewicht von 425 bis 1.000 Da aufweist.

16. Verfahren nach Anspruch 10, wobei das Mindest-Verhältnis des Pigments zu dem Polypropylenglykol 1 : 2 beträgt.

17. Verfahren nach Anspruch 1, wobei die Tinten-Formulierung umfasst:
0,5 - 15 Gew.-% eines Pigments,
0,5 - 30 Gew.-% Polypropylenglykol, und
55 - 99 Gew.-% Wasser,
wobei die Prozentangaben auf dem Gesamtgewicht der Tinten-Formulierung beruhen, und wobei die Tinten-Formulierung ein Verhältnis des Pigments zu dem Polypropylenglykol von mindestens 1 : 1 aufweist.

18. Verfahren nach Anspruch 1, wobei das Verhältnis des Pigments zu dem Polypropylenglykol 1 : 2 beträgt.

19. Verfahren nach Anspruch 1, wobei die Tinten-Formulierung umfasst:
2,5 - 7 Gew.-% des Pigments,
4-14 Gew.-% Polypropylenglykol, und
79 - 93,5 Gew.-% Wasser.

## Revendications

1. Procédé d'impression par jet d'encre du type "goutte-à-la-demande" utilisant
une formulation d'encre comprenant :
0,5 à 15 % en poids d'un pigment,
0,5 à 30 % en poids de polypropylène glycol, et
55 à 99 % en poids d'eau, dans lequel les pourcentages se basent sur le poids total de la formulation d'encre.

2. Procédé selon la revendication 1, dans lequel la formulation d'encre comprend :
1,5 à 7 % en poids de pigment,
3 à 14 % en poids de polypropylène glycol, et
60 à 95,5 % en poids d'eau.

3. Procédé selon la revendication 1, dans lequel la formulation d'encre comprend, en outre, au moins un additif.

4. Procédé selon la revendication 3, dans lequel l'additif est choisi dans le groupe constitué des co-solvants, des bases, des tensioactifs, des désaérateurs et des biocides.

5. Procédé selon la revendication 1, dans lequel le polypropylène glycol a une masse moléculaire supérieure à 250 à 1 000.

6. Procédé selon la revendication 1, dans lequel le polypropylène glycol a une masse moléculaire de 425 à 1 000.

7. Procédé selon la revendication 4, dans lequel le co-solvant est l'alcool isopropylique ou la 2-pyrrolidinone.

8. Procédé selon la revendication 1, dans lequel la formulation a un rapport du pigment au polypropylène glycol d'au moins 1:1.

9. Procédé selon la revendication 1, dans lequel la formulation a un rapport minimal du pigment au polypropylène glycol de 1:1 à 1:2,5.

10. Procédé d'impression par jet d'encre du type "goutte-à-la-demande" utilisant
une formulation d'encre comprenant :
un pigment,
du polypropylène glycol, et
de l'eau,
dans lequel la formulation d'encre a un rapport minimal du pigment au polypropylène glycol de 1:1 à 1:2,5.

11. Procédé selon la revendication 10, dans lequel la formulation d'encre comprend, en outre, au moins un additif.

12. Procédé selon la revendication 11, dans lequel l'additif est choisi dans le groupe constitué des co-solvants, des bases, des tensioactifs, des désaérateurs et des biocides.

13. Procédé selon la revendication 12, dans lequel le co-solvant est l'alcool isopropylique ou la 2-pyrrolidinone.

14. Procédé selon la revendication 10, dans lequel le polypropylène glycol a une masse moléculaire supérieure à 250 à 1000.

15. Procédé selon la revendication 10, dans lequel le polypropylène glycol a une masse moléculaire de 425 à 1 000.

16. Procédé selon la revendication 10, dans lequel le rapport minimal du pigment au polypropylène glycol est de 1:2.

17. Procédé selon la revendication 1, dans lequel la formulation d'encre comprend :
0,5 à 15 % en poids de pigment,
0,5 à 30 % en poids de polypropylène glycol, et
55 à 99 % en poids d'eau, dans lequel les pourcentages se basent sur le poids total de la formulation d'encre et dans lequel la formulation d'encre a un rapport du pigment au polypropylène glycol d'au moins 1:1.

18. Procédé selon la revendication 1, dans lequel le rapport du pigment au polypropylène glycol est de 1:2.

19. Procédé selon la revendication 1, dans lequel la formulation d'encre comprend :
2,5 à 7 % en poids de pigment,
4 à 14 % en poids de polypropylène glycol, et
79 à 93,5 % en poids d'eau.
